# FASCICULE DE BREVET EUROPEEN

(11) **EP 3 126 801 B1**
(45) Date de publication et mention de la délivrance du brevet: **17.03.2021**
(21) Numéro de dépôt: 15718524.0
(22) Date de dépôt: 27.03.2015
(51) Int. Cl.: G01L 1/20

(54) **DISPOSITIF D'ACQUISITION, PROCEDE DE FABRICATION DE CELUI-CI, PROCEDE DE MESURE DE FORCE.**
ERFASSUNGSVORRICHTUNG, VERFAHREN ZUR HERSTELLUNG DAVON UND KRAFTMESSVERFAHREN
ACQUISITION DEVICE, METHOD FOR THE PRODUCTION THEREOF, AND FORCE MEASUREMENT METHOD

(30) Priorité: 31.03.2014 FR 1452842
(43) Date de publication de la demande: 08.02.2017
(73) Titulaire: Institut Français des Sciences et Technologies des Transports, de l'Amenagement et des Reseaux, 77420 Champs sur Marne (FR); Consejo Superior De Investigaciones Científicas, 28006 Madrid (ES); Ecole Polytechnique, 91128 Palaiseau Cedex (FR)
(72) Inventeur: LEBENTAL, Bérengère, F-92300 Levallois Perret (FR); GHADDAB, Boutheina, H1S 1M8 Saint Léonard (CA); GAUDEFROY, Vincent, F-44120 Vertou (FR); RUIZ-HITZKY, Eduardo, E-28027 Madrid (ES); ARANDA GALLEGO, Pilar, E-28027 Madrid (ES); RUIZ GARCIA, Cristina, F-28027 Madrid (FR); HENNINGS, Birger, Chapel Hill, North Carolina 27514 (US)
(74) Mandataire: Cabinet Beau de Loménie
(86) Numéro de dépôt international: PCT/FR2015/050805
(87) Numéro de publication internationale: WO 2015/150676

(56) Documents cités:
- EP-A2- 0 218 465
- US-A- 4 799 381
- US-A1- 2011 227 836

## Description

Un premier aspect de l'invention concerne un dispositif d'acquisition comportant un transducteur permettant la détection et/ou la mesure de force lorsqu'il est intégré dans un capteur de force ; transducteur dans lequel la force appliquée n'est pas mesurée directement, mais est mesurée par l'intermédiaire d'une mesure de déformation : sous l'effet d'une force, le transducteur subit une déformation ; cette déformation induit une variation d'une grandeur mesurable du transducteur ; une partie de mesure du capteur détecte et/ou quantifie cette variation, et fournit un signal de sortie représentatif de la déformation et par suite de la force appliquée.

Naturellement, un tel transducteur peut également être utilisé pour la détection ou la mesure de déformations.

Une première application de tels transducteurs et capteurs est le pesage de véhicules sur une chaussée, à l'arrêt ou de préférence en mouvement.

Quand un véhicule est sur une chaussée, à l'arrêt ou en mouvement, la chaussée se déforme localement sous ses pneus. Cette déformation, qui est fonction entre autres du poids du véhicule, peut être détectée et/ou mesurée par un capteur ou un réseau de capteurs. Cette ou ces informations de déformation peuvent alors être interprétées afin de détecter la présence et de déterminer le nombre de roues des véhicules présents ou circulant sur la chaussée, leur vitesse et/ou leur direction de déplacement, ou encore leur poids.

Une deuxième application est le suivi de l'état de la chaussée, par exemple le suivi des déformations irréversibles de la chaussée et/ou la détection de fissures et/ou l'anticipation des fissures, par exemple en analysant la dérive des mesures du ou des capteurs soit obtenues en l'absence de véhicule soit agrégées suite au passage de plusieurs véhicules.

### Arrière-plan du premier aspect de l'invention

De nombreux capteurs de déformation ou de force ont été développés pour des applications de pesage de véhicules sur une chaussée, à l'arrêt ou en mouvement, et pour le suivi de l'état de la chaussée, comme par exemple les capteurs divulgués par les documents US4,799,381 ou EP 0218465.

Dans certains de ces capteurs, le transducteur est formé par un corps sur lequel sont fixées des électrodes, et qui est formé en un matériau tel que lorsqu'une paire d'électrodes sont fixées sur ce matériau, la résistance entre électrodes varie en fonction de la déformation subie par le matériau (c'est-à-dire un matériau piézorésistif).

La spécificité de ces capteurs est que les électrodes sont alors fixées de part et d'autre dudit corps, sur des faces du corps qui sont normales, c'est-à-dire perpendiculaires, à la direction d'application de la force à mesurer.

Lorsque cette force est appliquée au transducteur, le corps se déforme suivant cette direction ; par suite, la résistance mesurée entre les électrodes sur les faces normales à la force appliquée varie ; cette variation de résistance est détectée et/ou mesurée par le capteur de manière à fournir l'information cherchée.

De tels transducteurs sont réalisés par exemple sous forme de « bétons intelligents » ou d' « enrobés bitumineux intelligents », c'est-à-dire de bétons ou enrobés chargés en nanoparticules et présentant un comportement piézorésistif. Ils peuvent aussi être réalisés au moyen de polymères piézorésistifs.

Il existe également des transducteurs réalisés sous forme de rubans piézoélectriques, en particulier à base de polymère, céramiques et matériaux cristallins piézoélectriques.

Cependant, ces différents transducteurs ne sont pas pleinement satisfaisants car chacun d'eux pose au moins une partie des problèmes suivants :
- la durée importante nécessaire à la mise en place des transducteurs et donc le temps d'indisponibilité de la chaussée ;
- le manque de fiabilité de ces transducteurs à moyen et long terme, dû aux incompatibilités entre les matériaux des transducteurs et des matériaux de remplissage avec le matériau de chaussée, les transducteurs étant soumis à des contraintes très importantes et répétées ;
- l'altération de la chaussée causée par la mise en œuvre des transducteurs, ceux-ci ayant une hauteur non négligeable, qui réduit la durée de vie de la chaussée au voisinage des capteurs ;
- la faible précision des transducteurs, qui est affectée par la vitesse et la trajectoire des véhicules, les variations de température et d'humidité ;
- le coût important enfin, dû à la fois au prix des transducteurs, et à leur coût de mise en place dans la chaussée.

D'autres capteurs ont été développés tel que le capteur de force pour écran tactile divulgué par le document US2011/0227836.

### Objet et résumé du premier aspect de l'invention

Un premier objectif de l'invention est de proposer un dispositif d'acquisition pour mesurer une force s'exerçant sur une paroi ou une déformation d'un transducteur intégré sous une surface de la paroi, et par suite un capteur de déformations ou de force, permettant d'éliminer ou de réduire tout ou partie des inconvénients cités ci-dessus.

Ce premier objectif est atteint grâce à un dispositif d'acquisition comportant une paroi et un transducteur. Dans ce dispositif, le transducteur est constitué par un corps et une pluralité d'électrodes fixées audit corps à distance les unes des autres ; le transducteur est tel qu'une impédance électrique déterminée à partir de ladite pluralité d'électrodes est variable en fonction des déformations subies par le transducteur ; dans une vue suivant une direction perpendiculaire à une surface de la paroi, au moins deux électrodes de ladite pluralité d'électrodes sont séparées l'une de l'autre ; le transducteur est intégré sous la surface de la paroi ; les électrodes sont souples ; et le transducteur est configuré de telle sorte que, si une force est appliquée au dispositif d'acquisition sur ladite surface de la paroi, suivant une direction perpendiculaire à ladite surface, le transducteur se déforme principalement dans un plan sensiblement parallèle à la surface de la paroi, et une impédance mesurée entre lesdites au moins deux électrodes de ladite pluralité d'électrodes varie.

Par 'paroi' on désigne un corps (ou un ensemble de corps) délimité par une surface libre, c'est-à-dire une surface sur un côté de laquelle se trouve un fluide, notamment l'atmosphère. Une paroi peut éventuellement être flexible comme dans le cas d'un textile. Une paroi n'est pas nécessairement plane.

Le fait que le transducteur soit intégré sous la surface de la paroi signifie d'une part, que dans une vue suivant la direction perpendiculaire à la surface de la paroi, la paroi entoure le transducteur, et d'autre part que le transducteur est placé du côté de la paroi par rapport à la surface de la paroi (Le transducteur peut toutefois éventuellement être lui-même délimité par la surface de la paroi).

La seule impédance citée dans le présent document est l'impédance électrique ; elle est appelée par la suite simplement « impédance ».

Une impédance déterminée à partir d'une pluralité d'électrodes est une grandeur fonction d'au moins un ratio entre une tension et une intensité; pour chaque ratio parmi ledit au moins ratio, la tension est mesurée entre une première paire d'électrodes de ladite pluralité d'électrodes et l'intensité est appliquée à une deuxième paire d'électrodes de ladite pluralité d'électrodes. La première et la deuxième paire d'électrodes peuvent être identiques ou différentes.

Le plus souvent, l'impédance est classiquement égale au ratio entre la tension et l'intensité pour une unique paire d'électrodes.

L'impédance peut également désigner la « résistance moyenne », égale à la pente moyenne (déterminée par exemple par régression linéaire) de la courbe (droite) indiquant le courant en fonction de la tension (ou la tension en fonction du courant).

Dans le dispositif d'acquisition défini ci-dessus, la surface de la paroi inclut la surface prévue pour recevoir la force à détecter ou à mesurer.

Lorsque cette force est appliquée à la surface de la paroi, cela entraine une déformation du transducteur. Cette déformation entraine une variation d'impédance électrique entre les électrodes qui est susceptible d'être mesurée. La mesure de la déformation du transducteur (via la mesure de la variation d'impédance entre électrodes) permet donc de mesurer la force appliquée à la paroi.

Un dispositif d'acquisition peut comporter plusieurs transducteurs du type défini ci-dessus.

A la différence des transducteurs utilisés antérieurement, dans le dispositif d'acquisition selon l'invention les électrodes du transducteur ne sont pas alignées suivant la direction d'application de la force, mais au contraire, dans une vue suivant une direction perpendiculaire à la surface de la paroi, au moins une paire d'électrodes sont séparées : c'est-à-dire que suivant cette vue, ces deux électrodes n'ont aucun recouvrement et apparaissent disjointes. Cet agencement permet avantageusement qu'au moins ces électrodes soient disposées éventuellement au même niveau suivant la direction perpendiculaire à la surface, ce qui permet d'avoir un dispositif d'acquisition plus compact, voir éventuellement extrêmement compact, suivant cette direction.

Le dispositif d'acquisition peut donc, par exemple, être inclus dans la surface d'une chaussée de manière très peu intrusive.

Dans ce qui suit, on appelle « épaisseur », pour le dispositif d'acquisition, la dimension de celui-ci suivant la direction perpendiculaire à la surface de la paroi, et cette direction est appelée « direction perpendiculaire ».

En général le corps d'un transducteur selon l'invention est de faible épaisseur.

Il n'est pas nécessaire que le transducteur soit disposé au niveau de la surface de la paroi : il peut être situé à distance de cette surface.

Par suite, dans un mode de réalisation de l'invention le dispositif d'acquisition peut comporter en outre une couche de transfert séparant le transducteur de la surface de la paroi. En se déformant, cette couche de transfert provoque une déformation correspondante du transducteur qui est représentative de la force appliquée à la surface de la paroi.

De préférence, la couche de transfert adhère sur la face du transducteur située du côté de la surface, à savoir la face supérieure si le transducteur est disposé horizontalement.

La couche de transfert présente de préférence une épaisseur supérieure au triple de la dimension du corps du transducteur suivant la direction perpendiculaire.

La couche de transfert peut éventuellement être stratifiée et être elle-même formée d'au moins deux sous-couches.

La couche de transfert peut être agencée notamment de manière à se déformer notamment dans un plan transverse perpendiculaire à la direction d'application de la force. La couche de transfert dans ce cas convertit la force appliquée en une déformation 'transverse' du transducteur se produisant dans ce plan transverse ; et c'est cette déformation transverse qui crée une variation d'impédance mesurable entre électrodes.

La couche de transfert peut être également agencée de telle sorte que la force appliquée induise une déformation du transducteur suivant la direction perpendiculaire, et le transducteur peut être prévu tel qu'une telle déformation suffise pour créer une variation d'impédance mesurable entre électrodes.

La couche de transfert peut être également agencée pour combiner les deux effets.

La couche de transfert et la paroi peuvent être formées du même matériau, notamment des enrobés bitumineux. On comprend que dans la phrase précédente, le terme 'paroi' désigne la partie de la paroi entourant le transducteur (dans une vue suivant la direction perpendiculaire).

La couche de transfert et la paroi peuvent notamment être formées intégralement. Le fait que la couche de transfert et la paroi soient formées intégralement signifie que la couche de transfert est alors formée continûment avec le matériau de la partie de paroi entourant le transducteur. De manière alternative, la couche de transfert est un matériau rapporté après la formation de la paroi, dans le cas où le transducteur est placé dans un trou aménagé dans une paroi.

Le dispositif d'acquisition défini précédemment peut être utilisé pour réaliser un capteur, notamment un capteur pour détecter ou mesurer la déformation du transducteur, et/ou la force appliquée à la paroi.

Le capteur peut aussi être prévu pour indiquer les variations de la force appliquée à la surface de la paroi (plutôt que la force elle-même), qui sont alors généralement déterminées en fonction des variations d'impédance du transducteur.

Le capteur comporte alors au moins un dispositif d'acquisition tel que défini précédemment, et un système de détermination d'impédance, connecté à des électrodes d'au moins un transducteur dudit au moins un dispositif d'acquisition, et apte à déterminer une impédance et/ou une variation d'impédance dudit au moins un transducteur.

Le capteur peut comprendre notamment un ensemble de transducteurs disposés en réseau, ainsi que des moyens permettant d'identifier quels transducteurs sont activés ou sollicités à un instant donné. Un capteur comportant un tel réseau de transducteur peut être utilisé pour mesurer la vitesse et/ou la direction de déplacement d'un véhicule. Les transducteurs peuvent notamment être disposés suivant des lignes et des colonnes, c'est-à-dire suivant une disposition matricielle.

Dans un mode de réalisation, le capteur peut comporter deux (ou plus de deux) transducteurs, placés l'un au-dessus de l'autre suivant la direction d'épaisseur du capteur.

Dans ce cas, en vue perpendiculairement à la surface de la paroi du dispositif d'acquisition, les électrodes respectives des différents transducteurs peuvent notamment présenter des orientations différentes ; et par exemple former dans cette vue un angle de 90°.

Le système de détermination d'impédance peut être un système de détermination de résistance, constitué principalement par un ohmmètre qui détecte et/ou quantifie la résistance et/ou la variation de résistance entre les électrodes.

Dans un autre mode de réalisation, le système de détermination d'impédance évalue l'impédance complexe entre les électrodes, éventuellement en fonction de la fréquence ou à fréquence prédéfinie, pour en déduire par exemple la capacité et la permittivité relative du matériau entre les électrodes.

Le capteur peut comprendre en outre un système de corrélation pour déterminer la déformation du ou des transducteur(s), et/ou la ou les force(s) appliquée(s) à la paroi, sur la base de l'impédance du ou des transducteurs et/ou des variations de celles-ci.

Sur la base des informations fournies par le système de détermination d'impédance, le système de corrélation élabore un signal de sortie analogique ou numérique corrélé quantitativement ou qualitativement avec la déformation du ou des transducteurs ou la ou les forces appliquées à la surface de la paroi. La corrélation entre l'impédance ou les variations d'impédance entre les électrodes et le signal de sortie (considéré comme représentatif de la déformation ou de la force appliquée) est établie grâce à une étape préliminaire d'étalonnage et/ou par un modèle physique (électro-mécanique) du dispositif d'acquisition.

Le capteur peut également être un capteur de l'état de déformations de la chaussée ou du matériau qui accueille le capteur, en particulier les déformations irréversibles d'une chaussée, et un système pour la détection anticipée des fissures. Le capteur peut comprenant par exemple au moins un dispositif d'acquisition tel que défini précédemment, et un ohmmètre connecté à des électrodes du ou des transducteur(s), ou une matrice de transducteurs telle que définie précédemment. Le capteur fonctionne par exemple en analysant la dérive des mesures du ou des transducteurs, soit celles obtenues en l'absence de véhicules soit celles agrégées suite au passage de plusieurs véhicules.

Le capteur peut être également un capteur de vitesse et d'orientation d'un objet mobile sur un matériau, comprenant au moins un dispositif d'acquisition tel que défini précédemment, et un ohmmètre connecté à des électrodes du ou des transducteur(s), ou de préférence une matrice de transducteurs telle que définie précédemment.

Le dispositif d'acquisition ou le capteur selon l'invention peut être utilisé aussi bien pour la détection d'une force localisée (appui ponctuel) que pour la détection d'une force répartie.

Comme cela a été indiqué, en général le transducteur est de faible épaisseur. Le corps du transducteur a donc généralement la forme d'une couche, voire d'un (ou plusieurs) fil(s) ou bande(s) reliant les électrodes.

Le corps du transducteur peut par exemple former une couche mince, c'est-à-dire d'épaisseur inférieure à 1/10ème de l'une au moins des deux autres dimensions caractéristiques du corps du transducteur. L'épaisseur de cette couche peut notamment être inférieure à 1 mm, et de préférence 0,5 mm ou même 0,1 mm.

Les électrodes sont en général disposées de manière à être à un même niveau par rapport au corps du transducteur, suivant la direction perpendiculaire à la surface. Par exemple, les électrodes peuvent être placées sur la face située du côté de la surface, et celle du côté opposé à la surface, du corps du transducteur, ou encore à un même niveau intermédiaire de celui-ci.

Ces faces sont les faces supérieure et inférieure du corps du transducteur, lorsque le dispositif est disposé 'horizontalement', c'est-à-dire de telle sorte que la surface de sa paroi soit horizontale (ce qui est une possibilité parmi d'autres, pour l'implantation du dispositif d'acquisition selon l'invention). Conventionnellement, on désignera dans ce qui suit un élément comme étant « supérieur », s'il est situé du côté de la surface de la paroi par rapport au corps du transducteur, et inférieur un élément situé du côté opposé.

Comme indiqué précédemment, une application importante du capteur selon l'invention est le pesage de véhicules ou pour la mesure des déformations d'une chaussée.

Le dispositif d'acquisition est alors implanté sous la surface de la chaussée. Sa faible épaisseur permet qu'il soit implanté de manière peu intrusive. De plus comme cela va être développé plus loin, il peut être réalisé avec des matériaux compatibles avec les enrobés bitumineux.

Par suite, malgré les multiples sollicitations (climatiques, mécaniques,..) auxquelles est soumis un dispositif d'acquisition implanté dans une chaussée, avantageusement le dispositif d'acquisition selon l'invention peut présenter une durée de vie élevée.

Le dispositif d'acquisition ou un capteur intégrant un tel dispositif peut naturellement être utilisé pour détecter la présence et le poids d'objets (ou de personnes, d'animaux, etc.) sur une surface, ou encore toutes forces susceptibles d'être appliquées sur une surface.

Pour augmenter la durée de vie et la précision du transducteur, celui-ci peut comprendre en outre une couche de liaison interposée entre le corps du transducteur et une surface voisine du corps du transducteur, la couche de liaison adhérant au corps du transducteur et à ladite surface voisine. Cette surface voisine peut notamment être une surface de la couche de transfert citée précédemment. La couche de liaison est alors une couche de liaison supérieure, qui assure une liaison étroite entre la couche de transfert et le corps du transducteur.

Cette surface voisine peut également être une surface support supportant le transducteur du côté inférieur ; la couche de liaison est alors une couche de liaison inférieure, disposée entre le corps piézorésistif et cette surface support.

Le transducteur peut comporter à la fois des couches de liaison inférieure et supérieure.

Dans un mode de réalisation, le transducteur comporte en outre une deuxième paire d'électrodes séparées l'une de l'autre suivant une deuxième direction perpendiculaire à la direction transverse (La direction transverse étant la direction suivant laquelle sont espacées les électrodes de la paire d'électrodes citée précédemment, dite première paire d'électrodes). La deuxième paire d'électrodes permet de réaliser une mesure complémentaire et ainsi de mieux connaître les variations d'impédance du corps piézorésistif, et par extension, son état de déformations.

Dans un mode de réalisation, le transducteur comporte plusieurs paires d'électrodes formant les côtés parallèles deux à deux d'un polygone. Les côtés du polygone non parallèles entre eux peuvent avoir différentes longueurs. Les paires d'électrodes permettent de mieux connaître la résistance du transducteur du fait de la direction et de la géométrie choisies pour les électrodes, et par extension, de mieux connaître l'état de déformation du corps du transducteur.

Les électrodes peuvent bénéficier de tout ou partie des perfectionnements suivants :
- la paire d'électrodes peut être constituée d'électrodes interdigitées (c'est-à-dire, formant deux peignes imbriqués) pour diminuer la résistance du transducteur et augmenter sa sensibilité ;
- la partie des électrodes en contact avec le corps piézorésistif peut être sensiblement plane.
- la partie des électrodes en contact avec le corps piézorésistif peut être composée d'un fil mince ou d'un réseau de fils minces formant un peigne ou une grille, réguliers ou non réguliers.
- les électrodes peuvent par exemple être constituées dans un matériau dont le module de flexion est comparable ou inférieur à celui du corps piézorésistif. Cet agencement permet d'accroître la robustesse du transducteur.

Différents matériaux sont utilisables pour réaliser le corps piézorésistif.

Pour permettre la mesure d'une force appliquée à la surface de la paroi, il faut que l'impédance du corps piézorésistif (c'est-à-dire généralement sa résistance électrique) entre les électrodes, et donc selon la direction transverse, varie - de préférence fortement - en fonction de la force appliquée.

Pour réaliser le transducteur, on peut notamment utiliser un corps et des électrodes présentant l'une et/ou l'autre des caractéristiques suivantes :
• si une force est appliquée au dispositif d'acquisition suivant une direction perpendiculaire à la surface de la paroi, le transducteur se déforme principalement, voire essentiellement, suivant ladite direction perpendiculaire à la paroi, et une impédance mesurée entre les électrodes de ladite pluralité d'électrodes varie.

Eventuellement, cette variation d'impédance se produit même en l'absence de déformation du matériau suivant ladite direction perpendiculaire.
• si une force est appliquée au dispositif d'acquisition suivant une direction perpendiculaire à la surface de la paroi, le transducteur se déforme principalement, voire essentiellement, dans un plan sensiblement parallèle à la paroi, et une impédance mesurée entre les électrodes de ladite pluralité d'électrodes varie.

Une déformation se produisant principalement (ou respectivement essentiellement) suivant une direction signifie que le déplacement des points du matériau se produit dans une direction faisant un angle inférieur à 45° (respectivement inférieur à 20°) par rapport à ladite direction. Les caractéristiques indiquées ci-dessus peuvent être obtenues par le choix d'un matériau piézorésistif adapté pour former le corps du transducteur, et/ou par un choix d'électrodes ayant une rigidité adaptée.

Un exemple de transducteurs présentant ces caractéristiques sera donné par la suite.

Le corps du transducteur peut avoir différentes compositions chimiques.

Dans un mode de réalisation, le corps du transducteur comprend un réseau percolant de micro- et/ou de nano-particules. On désigne ici par microparticules ou respectivement nanoparticules, des particules dont au moins une des dimensions caractéristiques est inférieure respectivement à 100µm et 100nm.

Ces micro- et/ou nano-particules peuvent notamment comprendre une ou plusieurs particules parmi la liste suivante :
a) nanotubes de carbone, notamment en réseau aléatoire ou organisé,
b) micro ou nanoparticules auto-assemblées,
c) feuillets de graphene, graphite ou oxide de graphene réduit ou non.

Le réseau percolant peut comprendre également des particules d'argile, certaines desdites particules présentant une surface externe recouverte au moins en partie d'une substance conductrice.

Le corps du transducteur peut également comprendre un polymère piézorésistif, ou un mélange d'une pluralité de polymères piézorésistifs, ou un mélange d'au moins un polymère, par exemple un bitume, avec des micro- et nano-particules conductrices (formant ainsi un composite polymère à micro- ou nano-particules) ou un mélange de matériau cimentaire avec des micro et nanoparticules (appelé parfois 'ciment intelligent' ou 'béton intelligent').

L'invention concerne également un ruban comportant une pluralité de dispositifs d'acquisition tels que définis précédemment, fixés sur une bande. La bande peut être formée en un polymère flexible. Elle peut notamment être prévue pour pouvoir être conditionnée en bobine ou rouleau. La bande peut jouer le rôle de couche de transfert et/ou de couche présentant une surface support, afin de protéger ou supporter les dispositifs d'acquisition, comme cela a été exposé précédemment.

L'invention concerne également un poste de contrôle, par exemple une barrière de péage, comportant au moins une voie de circulation équipée d'un capteur de force tel que défini précédemment.

L'invention concerne également afficheur, par exemple un écran tactile, apte à afficher des informations variables, comportant au moins un dispositif d'acquisition tel que défini précédemment.

L'invention concerne également un procédé de mesure de force comportant les étapes suivantes :
a) on fournit un dispositif d'acquisition selon l'une quelconque des revendications 1 à 9 ;
b) on applique une force au transducteur dudit dispositif d'acquisition suivant une direction telle que dans une vue suivant cette direction, au moins deux électrodes de ladite pluralité d'électrodes sont séparées l'une de l'autre; et
c) on mesure la variation de l'impédance sous l'effet de la force appliquée.
d) on détermine la force appliquée en fonction de ladite variation d'impédance.

L'étape d) est réalisée en utilisant des connaissances préalables concernant la relation entre la déformation du transducteur et la force appliquée à celui-ci.

On comprend par ailleurs que la force peut être appliquée directement ou indirectement au transducteur. Par exemple, le transducteur peut être placé sous une couche de transfert (de transfert de force), et une force est appliquée à la couche de transfert et une partie de cette force est transmise au transducteur via la couche de transfert.

Un deuxième objectif de l'invention est de proposer un procédé de fabrication d'un dispositif d'acquisition selon l'une quelconque des revendications 1 à 9, comprenant donc un transducteur intégré dans une paroi, qui permette d'intégrer dans une paroi de manière simple un transducteur pour la détection et/ou la mesure de déformations et de forces, notamment un transducteur utilisable dans un capteur de force permettant de mesurer une force appliquée à une chaussée.

Cet objectif est atteint grâce au procédé défini par la revendication 15.

Ce procédé peut notamment être mis en œuvre dans le cas où la paroi est le sol ou la paroi d'un sol.

Dans ce procédé, l'étape b) est réalisée de préférence après l'étape a), c'est-à-dire qu'après avoir réalisé le transducteur, on intègre celui-ci sous la surface d'une paroi.

L'étape a) peut comprendre deux sous-étapes : a1) on positionne les électrodes ; a2) on forme le corps du transducteur.

Ces deux sous-étapes peuvent être réalisées dans l'ordre a1) puis a2), si le corps du transducteur est au-dessus des électrodes, ou a2) puis a1) dans le cas inverse, ou encore simultanément, si les électrodes notamment sont à l'intérieur du corps du transducteur.

A l'issue de l'étape b), la surface supérieure du corps du transducteur constitue une surface de paroi. Le procédé permet donc d'obtenir un dispositif d'acquisition comprenant un transducteur intégré dans une paroi conforme à l'invention.

L'étape b) de ce procédé peut notamment inclure le fait de déposer une couche de transfert sur le transducteur. De préférence, cette couche de transfert est conçue de manière à adhérer sur le transducteur.

Le procédé de fabrication de transducteur décrit ci-dessus peut être mis en œuvre en usine ; le transducteur est alors préfabriqué. Le corps du transducteur formé à l'étape a) peut alors notamment être formé sur une surface supérieure d'un ruban, par exemple un ruban en matière plastique.

De manière alternative, le transducteur peut être fabriqué et intégré à une paroi *in situ.* Le procédé peut alors notamment être utilisé pour réaliser des transducteurs intégrés dans le sol. L'étape b) indiquée précédemment de formation de la paroi peut consister alors à déposer une couche superficielle sur le sol, sur le transducteur. Cette couche superficielle peut par exemple être une couche d'enrobés bitumineux (mélange d'agrégats liés par un composé bitumineux).

Dans ce cas, le procédé s'intègre au procédé de fabrication de la chaussée en permettant d'intégrer un (ou plusieurs) d'acquisition à la chaussée.

Par suite, l'invention concerne également un procédé de fabrication de chaussée comportant les étapes suivantes :
A) On prépare une surface support ;
B) sur ladite surface support, on dépose au moins une couche d'enrobés bitumineux en y intégrant au moins un transducteur, de telle sorte que la chaussée comprenne un dispositif d'acquisition formé par un procédé tel que défini précédemment.

La couche d'enrobés bitumineux peut également, dans le cadre de l'invention, être constituée de tout autre matériau apte à réaliser une chaussée, par exemple des agrégats liés par un liant hydraulique, bitumineux, etc.

Ce procédé permet donc de réaliser des chaussées dans lesquelles sont intégrés un ou plusieurs transducteurs.

L'étape de préparation A) peut consister notamment soit à nettoyer ou araser la couche supérieure d'une chaussée existante, soit à déposer une couche inférieure de chaussée, qui est généralement une couche d'enrobés bitumineux.

La couche d'enrobés bitumineux déposée à l'étape B) est de préférence la couche supérieure de la chaussée, couche qui est déposée dans le cadre de la réalisation (ou de la réfection) normale de la chaussée. Une telle couche supérieure de chaussée s'étend habituellement suivant le sens de circulation de la chaussée sur une longueur d'au moins 10 mètres de part et d'autre du transducteur. Lorsque le transducteur est mis en place ou réalisé lors de la fabrication de la chaussée, avantageusement la pose du transducteur est réalisée sans étape préalable de creusement d'une tranchée dans la chaussée et d'enfouissement du transducteur dans la tranchée.

Dans un mode de mise en œuvre du procédé, l'étape A) comprend le dépôt d'une couche d'enrobés bitumineux inférieure, dont la surface supérieure constitue ladite surface support ; et les épaisseurs de la couche d'enrobés bitumineux inférieure et de ladite au moins une couche d'enrobés bitumineux sont telles que le transducteur est situé à une profondeur comprise entre 15% et 50% de l'épaisseur cumulée desdites couches d'enrobés bitumineux.

Par ailleurs, de préférence, l'épaisseur de ladite au moins une couche d'enrobés bitumineux est une fraction significative (supérieure à 1/10ème) de l'épaisseur cumulée desdites couches d'enrobés bitumineux de la chaussée.

Avantageusement, ce procédé de fabrication de chaussée assure une compatibilité optimale avec les matériaux de chaussées environnants (en particulier en termes de conformabilité, durée de vie, absence de corps étrangers perturbateurs), ce qui permet l'absence de raccords ou des raccords stables entre le reste de la chaussée et le dispositif de mesure, pour une meilleure durabilité de l'ensemble.

La mise en œuvre du procédé est simple d'où une indisponibilité minimale de la chaussée, avec la possibilité de réaliser le transducteur soit en usine à très faible coût, soit directement sur site avec des étapes de réalisation simples.

Enfin le procédé peut être adapté en fonction des problématiques de suivi de route étudiées. La taille caractéristique du transducteur peut ainsi varier du millimètre au mètre ; sa sensibilité peut être optimisée par un choix adapté du nombre de couches de matériau piézorésistif et d'électrodes. De plus, le conditionnement des courants traversant les transducteurs est simple et peu coûteux, ce qui rend plus facile l'utilisation simultanée d'un nombre élevé de transducteurs intégrés à un même capteur, et par exemple disposés en matrice.

Un deuxième aspect de l'invention concerne maintenant un matériau utilisable pour réaliser un transducteur.

Le transducteur peut être notamment un transducteur qui présente une grandeur électrique variable de type impédance électrique, notamment une résistance ou une résistivité, cette grandeur étant susceptible d'être détectée et/ou mesurée, le transducteur étant agencé de telle sorte que cette grandeur varie sous l'effet d'une sollicitation, par exemple une force ou une déformation, appliquée au transducteur.

### Arrière-plan du deuxième aspect de l'invention

Une famille connue de matériaux utilisables pour réaliser des transducteurs du type défini ci-dessus sont les matériaux piézorésistifs. Parmi les matériaux piézorésistifs, on connaît notamment les compositions à base de nanotubes de carbone. Les nanotubes de carbone peuvent être dispersés au sein d'une matrice pour former un réseau percolant et ainsi, conférer des propriétés de conductivité et dans certains cas de piézorésistivité à la matrice. Cependant, le coût des nanotubes de carbone est élevé.

### Objet et résumé du deuxième aspect de l'invention

Un objectif du deuxième aspect de l'invention est donc de proposer un matériau de coût faible utilisable pour réaliser un transducteur du type défini précédemment.

Cet objectif est atteint par un matériau composite comprenant une pluralité de particules d'argile mélangées à des éléments fibreux carbonés conducteurs, lesdites particules présentant une surface externe recouverte au moins en partie d'une substance conductrice.

Un matériau ou une substance est dit conducteur (conductrice) si sa résistivité p en (Ω·m) à 20 °C est inférieure à 100 Ω·m. De préférence, la conductivité des éléments fibrés carbonés conducteurs et de la substance conductrice est inférieure à 0,1 Ω·m, de préférence encore inférieure à 0,01 Ω·m.

Grâce aux propriétés de conductivité des particules d'argile ainsi recouvertes et des éléments fibreux carbonés conducteurs, le matériau ainsi défini avantageusement présente la qualité cherchée de présenter une impédance, et notamment (mais pas uniquement) une résistance, qui varie lorsqu'une force est appliquée au transducteur.

Avantageusement, les qualités de ce matériau sont obtenues avec des composants de faible prix :
- des éléments fibreux carbonés, qui ont un prix par kilogramme élevé, mais peuvent n'être utilisés qu'en quantités très réduites ; et
- une substance conductrice et des particules d'argile, qui sont ou peuvent être des composants de prix très faible.

De plus, comme cela va être détaillé plus loin, le matériau présente les propriétés cherchées même lorsqu'il est formé en couche très mince. Par suite, un faible volume de matériau suffit pour réaliser des transducteurs de surface importante.

Les différents perfectionnements suivants peuvent être apportés au matériau composite selon le deuxième aspect de l'invention, isolément ou en combinaison quelconque :
- La substance conductrice peut être par exemple une substance majoritairement composée d'atomes de carbone en hybridation SP2 (En effet, les matériaux à base d'atomes de carbone en hybridation SP2 sont conducteurs, contrairement aux matériaux à base d'atomes de carbone en configuration SP3.) ;
- La substance conductrice peut être de préférence une substance graphénoïde, c'est-à-dire une substance composée en majeure partie de graphène ou en une matière de type graphène (en Anglais : « graphene-like material ». Par suite, elle n'est pas nécessairement formée en une matière comportant une seule couche d'atomes de carbone) ;
- La substance conductrice peut former à la surface de particules une couche d'épaisseur moyenne inférieure à 10 µm ;
- Les éléments fibreux carbonés peuvent comprendre des nanotubes de carbone mono-paroi et/ou multi-parois, et/ou des nanofibres de carbone ; et/ou
- L'argile peut être une argile fibreuse, c'est-à-dire la sépiolite et/ou la palygorskite.

Dans un mode de réalisation, les particules d'argile couvertes au moins en partie d'une couche de substance conductrice sont telles que le matériau constitue une composition définie par l'une quelconque des revendications 1 à 12 de la demande de brevet internationale WO2012/160229.

L'invention concerne également un transducteur constitué par un corps constitué dans le matériau défini précédemment (le matériau bénéficiant éventuellement de tout ou partie des perfectionnements indiqués précédemment), et une pluralité d'électrodes fixées audit corps, et disposées à distance les unes des autres.

L'impédance électrique entre les électrodes varie lorsque le transducteur subit une déformation, par exemple lorsqu'une force lui est appliquée.

Dans un mode de réalisation préférentiel, le corps du transducteur forme une couche, et au moins une paire d'électrodes de ladite pluralité d'électrode sont écartées l'une de l'autre suivant une direction transverse située sensiblement dans un plan de la couche.

Cette couche peut être d'épaisseur inférieure à 1 mm, voire 0,1mm.

L'invention concerne également un afficheur apte à afficher des informations variables, dont une surface d'affichage comporte au moins un transducteur tel que défini précédemment, notamment un transducteur réalisé dans le mode de réalisation préférentiel cité ci-dessus.

L'invention concerne également un procédé de détection et/ou de mesure d'une force, dans lequel on met en œuvre un transducteur tel que défini précédemment, notamment un transducteur réalisé dans le mode de réalisation préférentiel cité ci-dessus, et on détecte et/ou on mesure une variation d'une impédance électrique déterminée entre des électrodes du transducteur qui se produit lorsque la force est appliquée au transducteur.

Le procédé peut notamment être utilisé dans le cas où la variation d'impédance électrique est une variation de résistance ou de résistivité du transducteur, sous l'effet de la force appliquée.

L'invention concerne également un procédé de préparation d'un matériau comprenant les étapes suivantes :
a) on fournit des éléments fibreux carbonés conducteurs ;
b) on mélange lesdits éléments à des particules d'argile dans un milieu liquide polaire ;
c) on ajoute un composé organique apte à se transformer en substance conductrice par carbonisation ;
d) on applique un traitement thermique de carbonisation au mélange ainsi obtenu.

Dans un mode de mise en oeuvre, le composé organique ajouté à l'étape c) est une substance apte à se transformer par carbonisation en substance majoritairement composée d'atomes de carbone en configuration SP2, et plus particulièrement une substance apte à se transformer en une substance graphénoïde.

Le composé organique ajouté à l'étape c) est un composant précurseur, permettant à l'étape d) de former une couche de substance conductrice à la surface des particules d'argile.

Par carbonisation, on désigne un chauffage en l'absence d'oxygène.

Le solvant liquide polaire peut être notamment à base d'eau, de méthanol, d'éthanol et/ou de propanol.

Le composé organique peut être notamment un biopolymère, du sucre, et/ou du caramel.

Le biopolymère peut par exemple être choisi parmi le chitosan, l'alginate, la pectine, la cellulose de gomme de guar, la gélatine, le collagène, la zéine, de l'ADN, ou toute combinaison de ceux-ci.

Le traitement thermique de carbonisation permet de dégrader le composé organique, et de condenser celui-ci sur les particules d'argile de telle sorte que la surface de celles-ci soit recouverte au moins en partie d'une couche d'une substance conductrice.

Avantageusement, bien que les éléments fibreux carbonés (qui peuvent notamment être des nanotubes de carbone) soient incorporés aux particules d'argile dès l'étape b), ils ne sont pas détruits et leurs propriétés ne sont pas affectées par l'étape d) de traitement thermique.

Par suite, le procédé défini ci-dessus permet de bénéficier des propriétés dispersives des particules d'argiles, qui permettent d'obtenir une dispersion homogène des éléments fibreux carbonés.

Dans le matériau obtenu, comme indiqué plus haut, les propriétés de conductivité et piézorésistivité des nanotubes de carbone s'associent avantageusement avec les propriétés de conductivité électrique de la couche conductriceformée sur les particules d'argile.

Dans un mode de mise en œuvre du procédé de préparation de matériau défini précédemment, à l'étape b) le mélange desdits éléments avec les particules d'argile peut notamment être réalisé par sonication, c'est-à-dire en soumettant ces particules à des ultra-sons.

Avantageusement, le transducteur et le procédé de fabrication présentent un coût très faible, grâce à l'emploi de matériaux actifs (les éléments fibreux carbonés) en très faible quantités, et en général seulement en une couche mince d'épaisseur très faible.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique en perspective représentant un capteur dans un premier mode de réalisation de l'invention, implanté dans une chaussée non représentée ;
- la figure 2 est une vue schématique en perspective partielle du capteur représenté sur la figure 1 ;
- la figure 3 est une vue schématique en coupe d'une chaussée dans laquelle est intégré le dispositif d'acquisition représenté partiellement sur la figure 2, en l'absence de véhicule ;
- la figure 4 est la même vue schématique en coupe d'une chaussée que la figure 3, mais représentée lors du passage d'un véhicule ;
- la figure 5 est un diagramme représentant les courbes de variation de distance entre électrodes et de résistance, dans un dispositif d'acquisition selon l'invention ;
- la figure 6 est une vue schématique en coupe d'une chaussée équipée d'un dispositif d'acquisition selon l'invention, comportant deux transducteurs ;
- la figure 7 est une vue schématique en perspective d'une chaussée équipée d'un dispositif d'acquisition selon l'invention, comportant trois transducteurs ;
- la figure 8 est une vue schématique illustrant les étapes de mise en œuvre d'un procédé de fabrication de chaussée selon l'invention ;
- la figure 9 est la même vue schématique en coupe de la chaussée obtenue par mise en œuvre du procédé illustré par la figure 8 ;
- la figure 10 est une vue schématique partielle de dessus d'un dispositif d'acquisition dans un autre mode de réalisation de l'invention ;
- la figure 11 est une vue schématique partielle de dessus d'un dispositif d'acquisition dans un autre mode de réalisation de l'invention ; et
- la figure 12 est un diagramme présentant la courbe de résistance entre paires d'électrodes en fonction de l'espacement entre paires d'électrodes, dans le dispositif de la figure 11.

Les éléments identiques ou similaires dans différents modes de réalisation comportent la même référence numérique.

Un matériau composite selon le deuxième aspect de l'invention, particulièrement adapté pour réaliser des transducteurs tels que définis précédemment, sans néanmoins être limité à cette seule utilisation, va maintenant être présenté.

Ce matériau composite comprend des particules d'argile mélangées à des éléments fibreux carbonés ; les particules d'argile présentent une surface externe recouverte au moins en partie d'une substance conductrice, de préférence de type graphénoïde.

Le terme « éléments fibreux carbonés » désigne les nanotubes de carbone mono-paroi et/ou multi-parois, ainsi que les fibres de carbone.

La substance graphénoïde forme généralement une couche mince à la surface des particules, ou tout au moins de certaines particules. L'épaisseur moyenne de cette couche peut être notamment inférieure à 10 µm. La composition de cette couche sera détaillée ci-dessous, lors de la présentation d'un procédé de réalisation d'une couche du matériau composite.

Avantageusement, la couche de substance conductrice présente à la surface des particules rend les particules ainsi recouvertes conductrices de l'électricité.

Cette propriété peut être vérifiée par exemple en utilisant un microscope électronique à balayage : lorsqu'une substance conductrice est observée avec un microscope électronique à balayage, sa surface ne présente pas d'accumulation d'électrons significative, comme on peut constater par exemple sur du graphène, considéré ici comme un exemple typique de matériau conducteur.

L'argile peut être choisie notamment parmi les argiles fibreuses c'est-à-dire la sépiolite et la palygorskite.

De manière connue en soi, les éléments fibreux carbonés permettent la réalisation de réseaux percolants conducteurs (de l'électricité). Avantageusement, le matériau décrit précédemment permet de bénéficier des qualités de conductivité et de percolation des éléments fibreux carbonés, mais cela sans qu'il soit nécessaire d'utiliser une quantité importante de ceux-ci. En effet dans le matériau composite défini précédemment, une grande partie de la conduction électrique est assurée non pas par les éléments fibreux carbonés, mais par les particules, grâce au fait qu'elles sont recouvertes au moins en partie de substance conductrice.

Il est donc possible d'utiliser une faible quantité d'éléments fibreux carbonés parce que, comme ceux-ci sont disséminés parmi des particules d'argile, ils ne constituent qu'une faible proportion du matériau.

De plus, avantageusement le matériau composite défini ci-dessus peut être utilisé en couche mince (par exemple de quelques dizaines de microns d'épaisseur), ce qui limite bien évidemment la quantité d'éléments fibreux carbonés utilisés.

La réalisation d'un corps composé du matériau composite tel que défini ci-dessus peut se faire par exemple via les deux étapes suivantes :
- la fabrication du matériau composite, qui est obtenu sous forme de poudre ; puis
- le dépôt de ce matériau sur une surface et la fabrication proprement dite du corps en matériau composite sur cette surface.

### Fabrication du matériau composite

Le matériau composite peut être réalisé par les étapes suivantes :
a) on fournit des nanotubes de carbone (et/ou des fibres de carbone linéaires) ;
b) on disperse ces nanotubes de carbone (et/ou les fibres de carbone linéaires) parmi des particules d'argile au moyen d'un solvant liquide polaire ;
c) on ajoute un composé organique apte à se transformer en substance conductrice par carbonisation, par exemple du caramel ;
   c2) on élimine le solvant ;
d) on effectue une carbonisation du mélange obtenu, de manière à transformer le composé organique en une substance conductrice recouvrant au moins en partie la surface externe des particules d'argile.

Les étapes a) et b) peuvent être faites par exemple par un procédé défini par l'une quelconque des revendications 16 à 20 de la demande de brevet internationale WO2011/070208.

En outre, l'étape c2) peut être faite par exemple conformément à l'étape c) de procédé définie par l'une quelconque des revendications 21 à 25 de la demande de brevet internationale WO2011/070208.

Le document WO2011/070208 fournit des exemples de mise en œuvre de procédés suivant ses revendications 16 à 25.

L'étape d) peut être faite par exemple par un procédé de préparation de matériau carboné tel que défini par l'une quelconque des revendications 22 à 41 de la demande de brevet internationale WO2012/160229 ; des exemples de mise en œuvre d'un tel procédé sont donnés en pages 10 et 11 de ce document.

### Exemple de fabrication du matériau composite

On utilise les trois composants suivants:
- des particules d'argile : 2,5 g de particules de sépiolite ;
- des éléments fibreux carbonés : 50 mg de nanotubes de carbone multiparois (soit 2 % masse par rapport à la sépiolite), et
- un solvant liquide polaire : 43 ml d'eau.

Les nanotubes de carbone sont obtenus préalablement de manière indépendante par la méthode CVD (déposition chimique en phase vapeur). On fait croître les nanotubes de telle sorte qu'ils aient un diamètre moyen de 10 nm et une longueur moyenne de 1 à 2 µm.

Le matériau est alors préparé de la manière suivante :
L'étape b) est divisée en trois étapes élémentaires b1, b2 et b3 :
b1) On mélange les trois composants indiqués ci-dessus.
b2) On homogénéise le mélange obtenu.

L'homogénéisation est effectuée par sonication. On utilise un équipement Vibracell VCX750 Sonics avec une pointe de Ti-Al-V de 13 mm de diamètre, fonctionnant à une fréquence de résonance de 20 kHz. L'énergie choisie est de 4.4 kJ (94,3 J/g). On applique des impulsions de 10 secondes séparées par des pauses.

L'homogénéisation par sonication peut être alternée avec une ou plusieurs opérations de malaxage du mélange.

### b3) On sèche le mélange.

On sèche le mélange à 60-70° C pendant une nuit.
c) on ajoute un composé organique comme précurseur, en l'occurrence 6,5 g de caramel liquide (caramel Royal™, 80 %), dans un ratio de 2:1 masse caramel-argile.
c2) On sèche à nouveau le mélange à 60-70° C pendant une nuit.
d) On cuit le mélange séché ainsi obtenu :
   Le mélange de sépiolite-nanotubes de carbone-caramel obtenu après séchage est cuit à une température de 800°C sous un flux d'azote avec une rampe de température en début de cuisson de 5°C/min.
   Le matériau est maintenu à cette température pendant 1 heure pour réaliser la transformation du caramel en une substance conductrice.
   Le matériau est alors réduit en poudre par broyage, de manière à pouvoir être déposé. De préférence, les particules obtenues par broyage ont des plus grands diamètres de Féret dont la valeur moyenne est inférieure à 50 µm ; et de préférence inférieure à 15 µm.

Le matériau sous forme de poudre ainsi obtenu peut alors être déposé de manière à former un corps piézorésistif, permettant de réaliser un transducteur ou un capteur de déformation ou de force.

### Structure du transducteur et du capteur

Pour réaliser le corps d'un transducteur selon le premier aspect de l'invention, tout matériau piézorésistif (mais pas uniquement de tels matériaux) peut être utilisé. On peut notamment utiliser le matériau composite comprenant des particules d'argile mélangées à des éléments fibreux carbonés conducteurs présenté précédemment.

De préférence, on utilise un matériau pouvant former une couche, notamment une couche mince.

Le corps du transducteur peut former une couche continue (sans trous). Il peut aussi former une couche comportant des trous et/ou des discontinuités, étant noté qu'il est préférable qu'il existe au moins un chemin continu passant dans le corps du transducteur et reliant l'une à l'autre les différentes électrodes.

Le matériau du corps du transducteur est de préférence constitué d'un matériau piézorésistif choisi de telle sorte que la résistance entre deux points de mesure (où sont placées les électrodes) varie fortement lorsqu'une force est appliquée au corps du transducteur suivant une direction perpendiculaire à la direction reliant les deux points de mesure.

Ce matériau peut être constitué en particulier d'un réseau percolant de micro ou nanoparticules (particules dont au moins une des dimensions caractéristiques est inférieure respectivement à 100µm et 100nm) ou d'un réseau percolant constitué d'un mélange de différents types de micro ou nanoparticules.

Les particules plus particulièrement appropriées sont :
a) des nanotubes de carbone en réseau aléatoire ou organisé,
b) des micro ou nanoparticules auto-assemblées,
c) des feuillets de graphene, graphite ou oxide de graphene réduit ou non,
d) différentes combinaisons des composants ci-dessus, mélangés, ou
e) un polymère piézorésistif ou un mélange de différents polymères piézorésistifs, ou
f) un mélange de un ou plusieurs polymères avec des micro et nanoparticules conductrices (composites polymères à nanoparticules) ou
g) un mélange d'enrobé bitumineux ou de bitume avec des micro et nanoparticules (asphalte intelligent).

Le corps du transducteur peut en particulier être réalisé avec le matériau composite comprenant des particules d'argile et des éléments carbonés fibreux présenté précédemment.

La capacité du matériau à présenter une résistance variable suivant une direction spécifique (suivant laquelle seront disposés les points de mesure de résistance) peut être augmentée en favorisant une certaine orientation des micro- ou nanoparticules dans le corps piézorésistif. Cela peut être fait par exemple par diélectrophorèse, pour des particules présentant un moment dipolaire. Ainsi un transducteur utilisant un tel matériau présente une sensibilité accrue à toute force induisant des déformations suivant la direction spécifique indiquée précédemment.

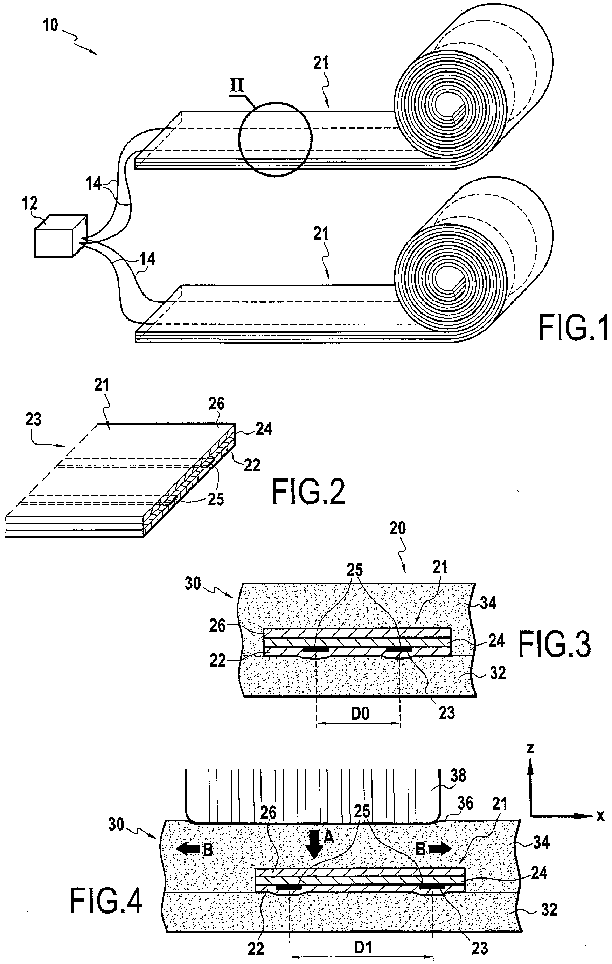

Un capteur de force 10 selon un premier mode de réalisation de l'invention va maintenant être présenté en relation avec les figures 1 à 7.

Le capteur 10 comporte un ensemble de dispositifs d'acquisition 20 identiques et un ohmmètre 12 constituant un dispositif de détermination d'impédance.

Chaque dispositif 20 est relié par deux fils électriques 14 à l'ohmmètre 12.

Chaque dispositif 20 comprend principalement un ruban 21 ayant la même structure sur toute sa longueur (Sur les figures 1 et 2, dans les dispositifs 20, seuls les rubans 21 sont représentés).

Chaque ruban 21, qui d'ailleurs constitue en lui-même un dispositif d'acquisition au sens de l'invention, est constitué principalement par une couche médiane 24 enserrée entre deux couches de liaison 22 et 26, constituées de la manière suivante :
- une couche de liaison inférieure 22 et une couche de liaison supérieure 26 identiques, constituées par un film plastique flexible, et
- une couche piézorésistive centrale 24 constituée en matériau piézorésistif, qui constitue le corps d'un transducteur au sens de l'invention.

Chaque dispositif 20 est normalement mis en place de manière à être disposé à plat sur un plan horizontal. Les trois couches ont alors chacune une forme plane horizontale.

Dans l'épaisseur de chaque ruban 21 sont logées en outre deux électrodes 25. Chaque électrode est constituée par un mince fil d'argent plat, interposé entre la couche de liaison inférieure 22 et la couche piézorésistive 24. Les électrodes 25 sont fixées à la couche piézorésistive 24 et solidaires de celle-ci. La couche 24 associée aux électrodes 25 constitue donc un transducteur 23. En effet, grâce aux propriétés de piézorésistivité de la couche 24, en cas de déformation du transducteur 23, la résistance entre les électrodes 25 varie.

On appelle surface active la surface de la couche piézorésistive 24 globalement comprise entre les deux électrodes et qui intervient dans la détermination de l'impédance entre les électrodes.

L'étendue et la forme de la surface active sont choisies en fonction de l'utilisation prévue du dispositif 20 (suivi local des déformations ou de l'endommagement d'une chaussée ; détection ou pesage statique ou dynamique de véhicules...). Cette surface active peut être très réduite (par exemple inférieure à 1 cm²) ou atteindre plusieurs m².

La surface active peut avoir une forme quelconque, isotrope (par exemple circulaire ou carrée) ou anisotrope (par exemple elliptique ou rectangulaire).

Un exemple d'implantation d'un dispositif d'acquisition 20 dans une chaussée est illustré par la figure 3.

Cette figure présente une section dans un plan vertical d'une chaussée 30 dans laquelle est intégré le dispositif 20. La chaussée 30 est constituée d'une couche inférieure 32 et d'une couche supérieure 34, toutes deux formées d'enrobés bitumineux. Les couches 32 et 34 reposent sur un sol non représenté. Le ruban 21 est disposé entre les deux couches de chaussée 32 et 34.

Chaque dispositif 20 est constitué par la partie de chaussée située au voisinage du ruban 21, et comprend donc une partie de la couche 32, le ruban 21, et une partie de la couche 34.

Sur la figure 3, dans le transducteur 20 les électrodes 25 sont disposées en dessous de la couche piézorésistive 24. Il est possible également de disposer les électrodes 25 au-dessus de cette couche, ou encore à l'intérieur même de la couche piézorésistive (en tant qu'exemple de corps de transducteur).

La couche supérieure 34 constitue une paroi présentant une surface supérieure libre 36. Le transducteur 23 est intégré sous la surface 36. Dans une vue suivant la direction perpendiculaire à la surface 36, c'est-à-dire suivant la direction verticale (flèche A, figure 4), les électrodes 25 sont séparées l'une de l'autre. Elles sont placées à même hauteur dans la chaussée 30, ce qui permet avantageusement que le dispositif 20 soit de faible épaisseur.

Les couches de liaison 22,26 peuvent être réalisées en élastomère silicone bicomposant ou en poly(éthylène-co-tétrafluoroéthyléne) ou ETFE.

Ces matériaux en effet présentent une forte adhérence avec le bitume des couches inférieure 32 et supérieure 34 de la chaussée. Grâce à cette adhérence, lors de déformations de la chaussée 30, le capteur 20 accompagne ces déformations sans qu'il n'y ait délaminage ou apparition de fissures internes à la chaussée aux interfaces entre le transducteur 23 et les couches 32 et 34 de la chaussée.

La couche de liaison inférieure 22 comme la couche de liaison supérieure 26 ne sont cependant pas en elles-mêmes nécessaires au fonctionnement d'un dispositif selon l'invention.

Par ailleurs, chacune de ces couches peut être elle-même constituée d'une ou plusieurs sous-couches. On peut par exemple utiliser une couche de liaison bimatériaux, c'est-à-dire composée de deux sous-couches, chacune étant composée en un matériau spécifique : le matériau de la sous-couche amené à être au contact de la couche piézorésistive 24 peut être choisi pour adhérer étroitement avec celle-ci, et le matériau de la sous-couche amenée à être au contact d'un matériau de chaussée (couche 32 ou 34) peut être choisi pour adhérer solidement avec ce matériau de chaussée.

Alors que la figure 3 représente la portion de route 30 au repos, la figure 4 représente la même portion de route lors du passage d'un véhicule.

Une portion du pneu 38 d'un véhicule est représentée. Le pneu 38 exerce une force de pression sur la surface supérieure 36 de la chaussée, suivant la direction verticale Z. Sous l'effet de cette force, la chaussée 30 se déforme : elle se tasse (flèche A), et les enrobés bitumineux de la chaussée se déplacent légèrement latéralement suivant la direction latérale X, horizontale et parallèle à la surface 36 de la chaussée (flèches B).

Au repos (Fig.3), les électrodes 25 sont écartées l'une de l'autre suivant la direction X d'une distance D0, qui est de l'ordre de quelques centimètres. Lors du passage d'un camion (Fig.4), la chaussée se déforme. Les électrodes 25 suivant la déformation des enrobés bitumineux constituant la chaussée et s'écartent l'une de l'autre : Lors du passage du véhicule, leur distance prend une valeur D1 strictement supérieure à la valeur D0.

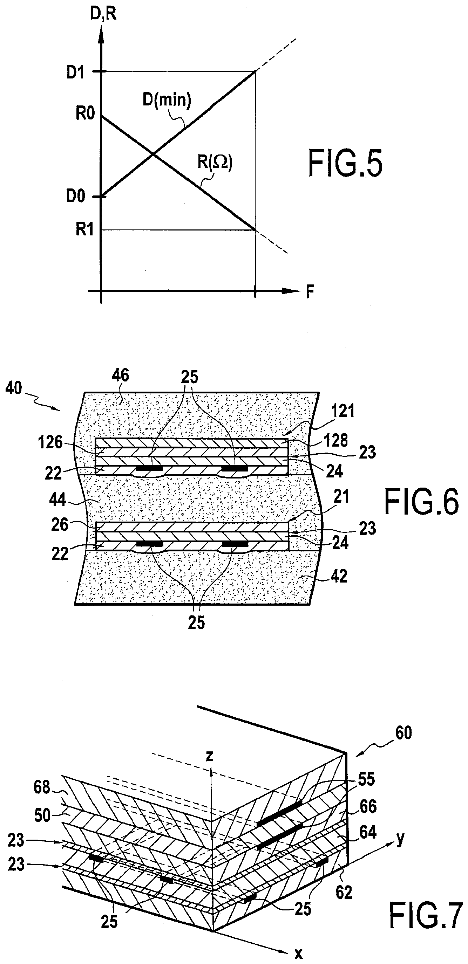

Le matériau piézorésistif de la couche 24 est choisi de telle sorte qu'il présente une résistance entre les électrodes variable en fonction de la distance entre les électrodes. Ce fonctionnement est illustré par la figure 5. Celle-ci représente deux courbes fonctions de la force F (poids du véhicule) appliquée à la chaussée 30 :
- La première courbe montre l'augmentation de la distance D entre les électrodes (qui passe de D0 à D1); et
- La deuxième courbe montre, pour la même augmentation de force, la diminution de la résistance R entre les électrodes 25.

Par suite, lors du passage du véhicule, la résistance entre les électrodes 25 varie. Ce changement de résistance est mesuré par l'ohmmètre 12. Ainsi, en fonction de la résistance mesurée entre les électrodes 25, l'ohmmètre 12 est à même de détecter et de mesurer la force appliquée au droit des électrodes 25 suivant la direction verticale.

Cette courbe montre que dans ce mode de réalisation, le transducteur 23 se déforme sous l'effet du poids du camion (de la force appliquée) de telle sorte que les électrodes 25 s'écartent latéralement ; et que sous l'effet de cet écartement, la résistance entre les électrodes diminue.

Les dispositifs d'acquisition illustrés par les figures 1 à 7 comprennent des électrodes 25 constituées en un matériau souple, en l'occurrence formées d'une mince couche d'argent.

Avec de telles électrodes constituées en matériau souple ou dans un matériau de rigidité analogue, le transducteur se comporte de la manière suivante : si une force est appliquée au dispositif d'acquisition suivant une direction perpendiculaire à la surface de la paroi, le transducteur se déforme principalement dans un plan sensiblement parallèle à la surface de la paroi, et une impédance mesurée entre les électrodes de ladite pluralité d'électrodes varie.

Note : Les figures ne sont pas représentées avec des échelles réalistes. Sur les figures, la hauteur (dimension suivant l'axe Z) est dilatée pour faciliter la compréhension. En réalité, le transducteur 20 est d'épaisseur très faible. Les couches inférieure 22 et supérieure 26 ont chacune une épaisseur de 0,4 mm. La couche piézorésistive 24 a une épaisseur de 0,01 à 0,05 mm.

Cependant, un capteur peut cependant fonctionner différemment. Un fonctionnement tout-à-fait différent peut être obtenu en choisissant des électrodes rigides (le capteur ne correspondant alors pas à l'invention revendiquée).

En effet, si l'on utilise des électrodes 25 constituées en un matériau rigide, par exemple en cuivre ou dans un matériau de rigidité analogue, le transducteur se comporte de la manière suivante : si une force est appliquée au dispositif d'acquisition 20 suivant la direction verticale perpendiculaire à la surface 36, le transducteur et notamment le corps du transducteur (couche piézorésistive 24) se déforment essentiellement suivant cette direction (verticale) ; et c'est cette compression qui fait varier la résistance de la couche 24 entre les électrodes 25.

Un autre exemple d'implantation de transducteurs 20 dans une chaussée est illustré par la figure 6. Cette figure présente une section d'une chaussée comprenant un dispositif d'acquisition 40 incluant deux transducteurs 23 placés l'un au-dessus de l'autre (suivant la direction verticale Z).

Si l'on fait abstraction des couches de liaison (qui seront présentées plus loin), le dispositif d'acquisition 40 est constitué successivement, en partant du bas, d'une couche inférieure 42 en enrobés bitumineux, d'un transducteur inférieur 23, d'une deuxième couche 44 en enrobés bitumineux, d'un transducteur supérieur 23, et d'une couche supérieure 46 également en enrobés bitumineux, et constituant une paroi ayant une surface supérieure libre. Le transducteur inférieur 23 est interposé entre les deux couches d'enrobés bitumineux 42 et 44 ; le transducteur supérieur 23 est interposé entre les couches d'enrobés bitumineux 44 et 46. Cette disposition permet d'avoir des informations sur l'importance des déformations de la chaussée, en fonction de la profondeur. Il est possible d'augmenter le nombre de transducteurs disposés dans le sol les uns au-dessus des autres.

Les deux transducteurs 23 ne sont pas implantés dans le dispositif d'acquisition 40 de la même manière.

Le transducteur 23 inférieur est enserré entre deux couches de liaison 22 et 26 et fait partie d'un ruban 21 identique à celui présenté sur les figures 1-4.

Inversement, le transducteur 23 fait partie d'un ruban 121 comprenant une couche de liaison inférieure 22, le transducteur 23, et une couche de liaison supérieure constituée de deux sous-couches 126 et 128. La sous-couche 126 est choisie de manière à avoir une bonne adhérence sur la couche piézorésistive 24, et est formée par exemple en ETFE ; la sous-couche supérieure 128 est choisie de manière à avoir une bonne adhérence avec les enrobés bitumineux de la couche 46, et est formée par exemple en élastomère silicone bicomposant.

D'autre part, en fonction des informations que l'on cherche à acquérir sur les déformations de la chaussée (ou du matériau dans lequel est placé le dispositif d'acquisition), les électrodes peuvent être placées suivant différentes orientations :
Ainsi dans un mode de réalisation de l'invention (Fig.7), deux transducteurs 23 selon l'invention, et un troisième transducteur 50 sont implantés dans une chaussée 60. La chaussée 60 est composée, en partant du bas, de quatre couches parallèles (et horizontales) d'enrobés bitumineux 62,64,66,68.

Chacun des premier et deuxième transducteur 23 est constitué par une couche de matériau piézorésistif 24, et deux électrodes 25 solidaires de cette couche de matériau et espacées l'une de l'autre dans le plan de cette couche. Les premier et deuxième transducteur 23 sont disposés respectivement entre les couches 62 et 64, et entre les couches 64 et 66. Le premier transducteur 23 est disposé de telle sorte que ses électrodes 25 s'étendent parallèlement l'une à l'autre suivant la direction X : Elles sont situées à distance l'une de l'autre suivant la direction Y. Inversement, le deuxième transducteur 220 est disposé de telle sorte que ses électrodes 25 s'étendent parallèlement l'une à l'autre suivant la direction Y : Elles sont situées à distance l'une de l'autre suivant la direction X.

Le troisième transducteur 50 est constitué par une couche de matériau piézorésistif et deux électrodes 55. Les électrodes 55 sont placées respectivement au-dessus et au-dessous de la couche de matériau piézorésistif du transducteur 50. Ainsi, vues suivant la direction verticale, les électrodes 55 ne sont pas séparées l'une de l'autre.

Grâce à la disposition spécifique des transducteurs 23 et 50, il est possible de mesurer simultanément les déformations de la chaussée suivant les trois directions X, Y et Z.

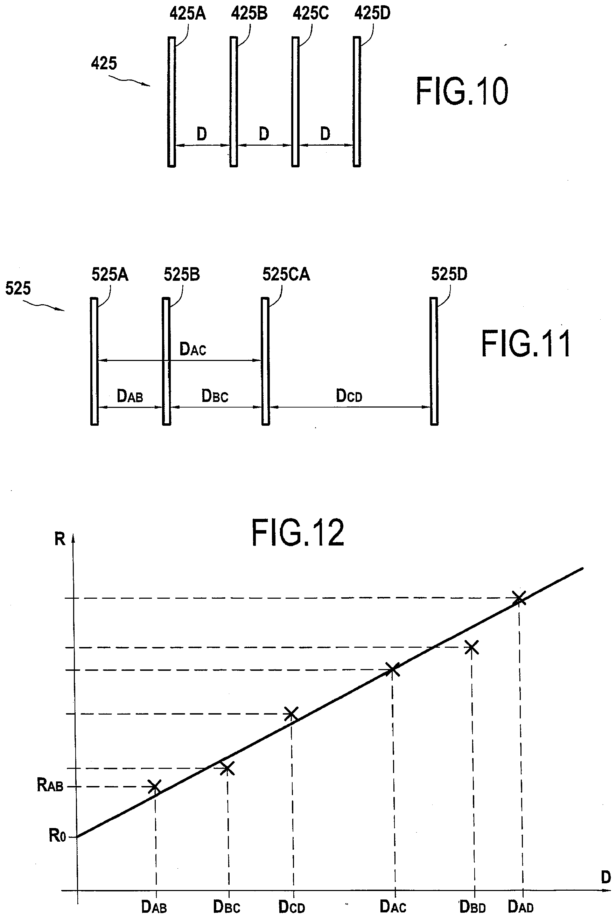

La figure 10 présente un autre mode de réalisation de dispositif d'acquisition selon l'invention.

Dans ce dispositif, le transducteur comporte quatre électrodes 425A, 425B, 425C, 425D allongées (appelées collectivement les électrodes 425), disposées parallèles les unes aux autres et équidistantes dans un plan sensiblement parallèle à la surface de la paroi.

On effectue une mesure dite « 4 pointes » :
On fait passer un courant électrique entre les deux électrodes les plus éloignées (les électrodes 'extrêmes') 425A et 425D ;

On mesure la tension entre les électrodes 'intérieures' 425B et 425C.

L'impédance est calculée en faisant le ratio entre le courant imposé entre les électrodes extrêmes et la tension mesurée entre les deux électrodes intérieures.

La valeur trouvée corrigée des effets géométriques, est appelée résistance carrée du transducteur.

La résistivité du matériau piézorésistif est alors obtenue en multipliant la résistance carrée par l'épaisseur moyenne du corps du transducteur.

Avantageusement, on peut en outre déduire la résistance de contact des électrodes de la résistivité du matériau ou de la résistance par carré.

L'utilisation de la résistance carré ou de la résistivité comme valeur de sortie du capteur permet de minimiser la sensibilité du transducteur au comportement des électrodes, par exemple dans le cas où les contacts nuisent à la qualité de la mesure (dégradation dans le temps par exemple).

L'utilisation de la résistance de contact comme valeur de sortie du capteur permet de maximiser la sensibilité de celui-ci au comportement des électrodes, par exemple quand le déplacement relatif entre les électrodes et le corps piézorésistif est une cause majeure du phénomène de piézorésistivité.

Les figures 11 et 12 présentent un autre mode de réalisation de dispositif d'acquisition selon l'invention.

Dans ce dispositif, on dispose plusieurs électrodes en parallèle, au moins trois et de préférences plus de quatre électrodes, avec une distance D croissante entre électrodes. En l'occurrence, on a quatre électrodes 525A, 525B, 525C et 525D (appelées collectivement les électrodes 525).

On effectue une mesure de type TLM, c'est-à-dire que l'on mesure la résistance R entre les différentes paires d'électrodes, à savoir un ensemble de résistances Rij mesurées entre les différentes paires d'électrodes 525i-525j.

La pente de la droite représentant la résistance R en fonction de l'espacement D entre paires d'électrodes, corrigée des facteurs géométriques, donne la résistivité ou la résistance par carrée ; l'ordonnée à l'origine de la droite donne la résistance de contact R0.

Un capteur selon l'invention comporte principalement un ou plusieurs transducteurs tels que décrits précédemment, reliés à système de détermination d'impédance, par exemple l'ohmmètre 12 présenté précédemment, servant à mesurer la résistance de la couche piézorésistive entre les électrodes des différents transducteurs.

Le système de détermination d'impédance peut comprendre une chaîne de conditionnement de signal traditionnelle. Par exemple un (deux pour une décorrélation automatique de la température) transducteur peut être interposé dans un pont de Wheatstone complété par trois (ou deux) résistances (de préférence stables en température). La mesure est alors effectuée en appliquant la tension délivrée par une source de tension 3V à 10V ; la lecture se fait par une chaîne d'acquisition de type amplificateur instrumental, avec filtrage, correction d'offset, et conversion analogique/numérique. La partie analogique du système est éventuellement complétée par des moyens permettant de réaliser la mesure à distance, par exemple des moyens permettant la compensation des pertes résistives dans les fils au cas où le système de mesure est éloigné du capteur), et par un shunt d'étalonnage.

Tout autre système classique d'acquisition et de numérisation de résistance variable peut convenir, en particulier les systèmes qui proposent des techniques de compensation en température. Alternativement, la résistance variable peut-être placée dans un système de type sigma-delta pour effectuer simultanément la conversion analogique-numérique et la lecture de la valeur de résistance.

Pour réaliser un capteur de force, le capteur comporte en outre un système de corrélation (représenté également par le boîtier 12) permettant de déterminer la déformation du ou des transducteur(s), et/ou la ou les force(s) appliquée(s) à la paroi, sur la base de l'impédance du ou des transducteurs et/ou des variations de celles-ci, telles que mesurées par le système de détermination d'impédance.

Lorsque le capteur comporte plusieurs transducteurs, ceux-ci peuvent notamment être organisés en réseau matriciel.

Dans le cas d'un capteur servant au pesage de véhicules, de préférence le système de détermination d'impédance (l'ohmmètre) et éventuellement le système de corrélation sont déportés sur le bord de la chaussée. Ce ou ces systèmes peuvent également être réalisés dans un matériau flexible, packagés de façon ad-hoc et placés en-dessous ou au-dessus de la couche de matériau piézorésistif des transducteurs, soit au cœur de l'enrobé, soit dans une couche de liaison.

Une fois le signal d'un ou des transducteurs numérisé, le signal est traité ou non sur site et transmis par tout moyen de transmission approprié, par exemple par centrale d'acquisition, data-logger, nœud communicant radio autonome ou non en énergie, RFID, etc.

### Fabrication : le corps piézorésistif, le dispositif d'acquisition, le capteur

La fabrication du corps piézorésistif est l'étape principale pour la réalisation d'un dispositif d'acquisition selon l'invention. Pour cette étape, différentes méthodes peuvent être utilisées. Le choix de la méthode dépend du matériau piézorésistif souhaité et du lieu de mise en œuvre (en usine ou sur chantier).

Certains types de matériau piézorésistif peuvent être déposés en phase vapeur (évaporation, dépôt chimique ou physique) sur une surface support. Cette opération peut être réalisée soit sur site (fabrication *in situ*), soit en usine.

On peut préférer cependant le dépôt en phase liquide des composants du matériau. Un tel dépôt est réalisable en usine ou sur site.

Le mode opératoire peut être le suivant :
i) On met le matériau piézorésistif, préalablement réduit en poudre, en solution dans un solvant.
   Cela peut être fait selon les techniques classiques (par exemple agitation magnétique, sonication en bain à ultrasons ou par pointe, centrifugation éventuelle,...). Le solvant est préférentiellement, mais pas exclusivement, aqueux ; les propriétés du solvant peuvent être le cas échéant optimisées par l'utilisation d'additifs (par exemple surfactants) susceptibles d'améliorer la qualité du dépôt (par exemple son homogénéité).
ii) On dépose la solution ainsi obtenue sur la surface sur laquelle doit être formée le corps (ou la couche) piézorésistif.
   Ce dépôt peut être fait selon les techniques classiques. La technique utilisée est choisie en fonction des propriétés physico-chimiques de la solution et de la surface à couvrir, de l'exigence d'homogénéité, des éventuelles contraintes temporelles, du lieu de mise en œuvre. Le dépôt peut être fait par exemple par impression jet d'encre, par dépôt par goutte, par spray, par tournette, ou par pinceau.
iii) On élimine le solvant.

Cette opération est réalisée par toute méthode connue, notamment par évaporation naturelle ou forcée.

La fabrication d'un dispositif d'acquisition comme le dispositif 20 (Fig.3) se fait en plusieurs étapes :
A) On prépare une surface support sur laquelle la chaussée doit être réalisée.
B) On réalise la chaussée en y intégrant le dispositif d'acquisition.

L'étape B) comprend plusieurs phases :
i) on dépose la couche inférieure 32 d'enrobés bitumineux ;
ii) on dépose la couche de liaison inférieure 22 sur la surface supérieure de la couche 32 de telle sorte que la couche 22 adhère à la couche 32 ;
iii) on positionne la paire d'électrodes 25 sur la couche 22 en les espaçant suivant la direction horizontale (X, Fig.4) ;
iv) on forme la couche piézorésistive 24 en matériau piézorésistif sur la couche 22 et les électrodes 25 ;
v) on dépose la couche de liaison supérieure 26 sur la couche piézorésistive 24 de telle sorte que la couche de liaison 26 adhère à la couche piézorésistive 24 ;
vi) on dépose alors la couche supérieure 34 d'enrobés bitumineux sur la couche de liaison 26.

Un dispositif d'acquisition ayant la même structure que le dispositif 20 (une couche inférieure, une couche de liaison, une couche piézorésistive, une couche de liaison, une couche supérieure ou de transfert) peut être fabriqué en usine. Dans ce cas, les transducteurs peuvent notamment être fabriqués en ruban (de matière plastique), comme c'est le cas du ruban 21 représenté sur la figure 1. Les couches inférieure 22 et supérieure 26 sont alors des films ou plaques en matière plastique. Le conditionnement en ruban facilite la mise en place ultérieure du transducteur surtout lorsqu'un certain nombre de transducteurs sont posés ou positionnés conjointement.

De manière alternative le dispositif d'acquisition peut également être fabriqué directement *in situ.* Ce mode de fabrication est particulièrement adapté pour la réalisation de capteurs de pesage dynamique de véhicules. Dans ce dernier cas, la fabrication du dispositif d'acquisition peut notamment être intégrée aux opérations normales de fabrication de la chaussée. L'intégration du dispositif d'acquisition au sein de la chaussée permet de conférer à celle-ci une fonction additionnelle (la pesée dynamique de véhicules), et cela pour un coût extrêmement réduit.

Pour réaliser un capteur, il suffit alors de relier le dispositif d'acquisition obtenu par le procédé précédent à un système de détermination d'impédance, par exemple un ohmmètre, lui-même éventuellement relié à un système de détermination de déformation ou de force, si l'on veut obtenir comme valeur de sortie directement une déformation ou une force.

Plusieurs transducteurs peuvent éventuellement être reliés au même système de détermination d'impédance.

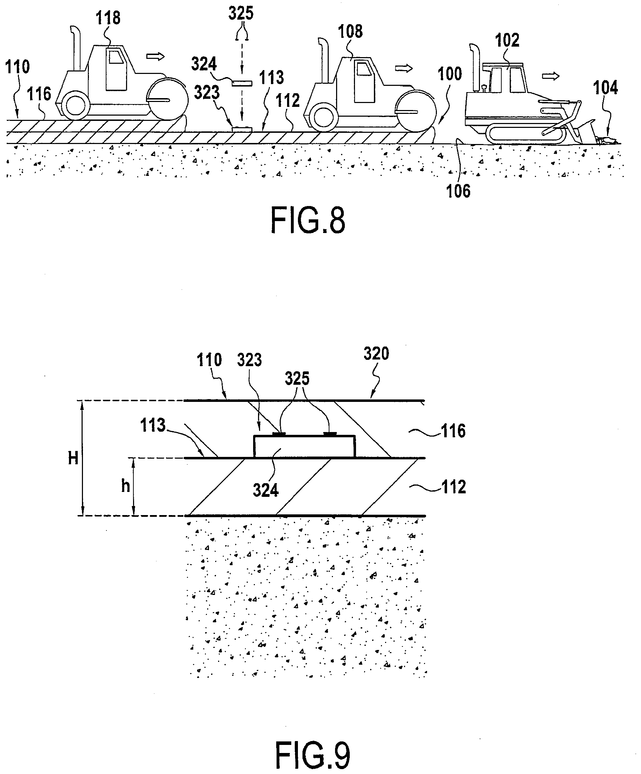

Une application importante des capteurs présentés précédemment est la réalisation de capteurs intégrés à des chaussées et permettant la détection, le comptage et la pesée de véhicules, ou encore le suivi des déformations de la chaussée. La fabrication d'une chaussée intégrant un tel capteur peut par exemple être effectuée de la manière suivante (Figs.8 et 9) :

### Décapage de la route

On fait passer une raboteuse 102 qui décape la couche superficielle 104 d'une route 100. Cette opération fait apparaître une surface décapée 106 sur laquelle peut être réalisée une nouvelle chaussée 110.

### Pose d'une première couche d'enrobés bitumineux

Sur la surface 106, on dépose une première couche d'enrobés bitumineux 112 et on la lisse avec un rouleau-compresseur 108. La surface supérieure 113 de la couche d'enrobés bitumineux 112 constitue une surface support prête à recevoir le transducteur.

### Fabrication in situ du dispositif d'acquisition

On peut utiliser un transducteur préfabriqué en usine. A l'étape iv) indiquée ci-dessus, il suffit alors de positionner ce transducteur sur la surface supérieure 113 de la couche 112.

De manière alternative, le transducteur peut être fabriqué directement à l'étape iv) sur la surface de la couche 112 d'enrobés bitumineux de la manière suivante :
- On utilise une poudre de matériau composite comprenant des particules d'argile recouvertes au moins en partie d'une substance conductrice, et des nanotubes, du type indiqué précédemment ;
- On dilue cette poudre dans l'eau de manière à obtenir une solution aqueuse à 0,5% masse de matériau composite ;
- Sur l'enrobé compacté encore chaud constituant la couche d'enrobés bitumineux 112, on dépose quelques gouttes de cette solution aqueuse ;
- On place ensuite deux électrodes 325, séparées de quelques centimètres l'une de l'autre, de telle sorte que chaque électrode soit en contact de la zone sur laquelle la solution aqueuse a été versée.
- On fait s'évaporer l'eau, d'abord librement puis à l'aide d'un décapeur thermique qui projette sur la solution aqueuse un flux d'air chauffé à environ 200°C.

On obtient ainsi un corps de transducteur 324 en matériau piézorésistif, formé sur la surface 113 de la couche inférieure 112. Le corps 324 associé aux électrodes 325 forme un transducteur 323. La portion de chaussée comprenant la couche 112, le transducteur 323 et la couche 116 forme une dispositif d'acquisition 320.

Ce mode de mise en œuvre ne comprend la pose d'aucune couche de liaison pour lier le transducteur 323 aux couches voisines.

### Pose d'une deuxième couche d'enrobés bitumineux

On dépose alors une deuxième couche d'enrobés bitumineux 116 sur la première couche 112 et le transducteur 323, et on lisse cette deuxième couche avec un rouleau-compresseur 118.

Dans ce mode de mise en œuvre, la couche 116 est formée directement sur la couche piézorésistive 324 sur laquelle ont été fixées les électrodes 325.

Les opérations de mise en place du transducteur s'insèrent donc dans le planning normal de fabrication de la chaussée 11.

De préférence, les épaisseurs des couches 112 et 116 sont choisies telles que le transducteur 323 est situé à une profondeur h comprise entre 15% et 50% de l'épaisseur H de la chaussée 110.

Naturellement, d'autres méthodes que celle présentée ci-dessous peuvent être mises en œuvre tout en restant dans le cadre de l'invention. Notamment, une chaussée peut être composée de strictement plus de deux couches. Un transducteur selon l'invention peut être placé de préférence interposé entre deux couches. Il peut aussi de manière alternative être implanté à l'intérieur même des enrobés bitumineux d'une couche.

## Revendications

1. Dispositif d'acquisition (20) pour mesurer une force s'exerçant sur une paroi ou une déformation d'un transducteur intégré sous une surface (36) de la paroi ; le dispositif comportant ladite paroi et ledit transducteur (23,323), et dans lequel
le transducteur est constitué par un corps (24,324) et une pluralité d'électrodes (25,325,425,525) fixées audit corps à distance les unes des autres ;
le transducteur est tel qu'une impédance électrique (R) déterminée à partir de ladite pluralité d'électrodes est variable en fonction des déformations subies par le transducteur ;
dans une vue suivant une direction perpendiculaire à la surface (36) de la paroi, au moins deux électrodes (25) de ladite pluralité d'électrodes sont séparées l'une de l'autre ; et
le transducteur est intégré sous la surface (36) de la paroi ;
le dispositif **se caractérisant en ce que**
lesdites électrodes sont souples ; et
le transducteur est configuré de telle sorte que, si une force est appliquée au dispositif d'acquisition sur ladite surface (36) de la paroi, suivant une direction perpendiculaire à ladite surface, le transducteur se déforme principalement dans un plan sensiblement parallèle à la surface de la paroi, et une impédance mesurée entre lesdites au moins deux électrodes (25) de ladite pluralité d'électrodes varie.

2. Dispositif d'acquisition selon la revendication 1, comportant en outre une couche de transfert (34,46,116) adhérant sur une face du transducteur (23,323) et séparant le transducteur de la surface de la paroi, et dans lequel la couche de transfert (34,46,116) et la paroi sont formées du même matériau, notamment des enrobés bitumineux.

3. Dispositif d'acquisition selon la revendication 2, dans lequel la couche de transfert (34,46,116) et la paroi sont formées intégralement.

4. Dispositif d'acquisition selon l'une quelconque des revendications 1 à 3, dans lequel le corps du transducteur (24) comprend un polymère piézorésistif, ou un mélange d'une pluralité de polymères piézorésistifs, ou un mélange d'au moins un polymère avec des micro- et nano-particules conductrices ou un mélange d'enrobé bitumineux ou de bitume avec des micro et nanoparticules.

5. Dispositif d'acquisition selon l'une quelconque des revendications 1 à 3, dans lequel le corps (24) du transducteur comprend un réseau percolant de micro-et/ou de nano-particules, lesdites micro- et/ou nano-particules comprenant une ou plusieurs particules parmi la liste suivante :
a) nanotubes de carbone, notamment en réseau aléatoire ou organisé,
b) micro ou nanoparticules auto-assemblées,
c) feuillets de graphène, graphite ou oxide de graphène réduit ou non.

6. Ruban (21,121) comportant une pluralité de dispositifs d'acquisition selon l'une quelconque des revendications 1 à 5, fixés sur une bande, notamment une bande formée en polymère flexible.

7. Capteur (10) comportant au moins un dispositif d'acquisition (20,120) selon l'une quelconque des revendications 1 à 5, et un système de détermination d'impédance (12), connecté à des électrodes (25,325,425,525) d'au moins un transducteur dudit au moins un dispositif d'acquisition, et apte à déterminer une impédance et/ou une variation d'impédance dudit au moins un transducteur.

8. Capteur (10) selon la revendication 7, comprenant un ensemble de transducteurs disposés en réseau, notamment de manière à former une matrice, et comprenant en outre des moyens permettant d'identifier quels transducteurs sont activés ou sollicités à un instant donné.

9. Afficheur apte à afficher des informations variables, comportant au moins un dispositif d'acquisition selon l'une des revendications 1 à 5.

10. Procédé de mesure de force comportant les étapes suivantes :
a) on fournit un dispositif d'acquisition selon l'une quelconque des revendications 1 à 5 ;
b) on applique une force au transducteur dudit dispositif d'acquisition suivant une direction telle que dans une vue suivant cette direction, au moins deux électrodes de ladite pluralité d'électrodes sont séparées l'une de l'autre;
c) on mesure la variation de l'impédance sous l'effet de la force appliquée ; et
d) on détermine la force appliquée en fonction de ladite variation d'impédance.

11. Procédé de fabrication d'un dispositif d'acquisition selon l'une quelconque des revendications 1 à 5, comportant ladite paroi et ledit transducteur, le procédé comportant les étapes suivantes :
a) on positionne la pluralité d'électrodes souples (25,325,425,525) au contact du corps (24), le corps et lesdites électrodes étant tels qu'une impédance électrique (R) déterminée à partir de ladite pluralité d'électrodes est variable en fonction des déformations subies par le corps associé à ladite pluralité d'électrodes ; le corps et ladite pluralité d'électrodes formant ainsi un transducteur (23) ; et
b) on forme la paroi ;
les étapes a) et b) étant réalisées de telle sorte que le transducteur (23) est intégré sous ladite surface (36) de la paroi, et que dans une vue suivant une direction perpendiculaire à ladite surface, au moins deux desdites électrodes (25,325,425,525) sont séparées l'une de l'autre.

12. Procédé de fabrication de chaussée comportant les étapes suivantes :
A) On prépare une surface support (113) ;
B) sur ladite surface support, on dépose au moins une couche d'enrobés bitumineux (116) en y intégrant au moins un transducteur (320), de telle sorte que la chaussée comprenne un dispositif d'acquisition formé par un procédé selon la revendication 11.

13. Procédé de fabrication de chaussée selon la revendication 12, dans lequel l'étape B) comprend plusieurs phases :
i) on dépose une couche inférieure (32) d'enrobés bitumineux ;
ii) on dépose une couche de liaison inférieure (22) sur une surface supérieure de la couche inférieure (32) de telle sorte que la couche de liaison inférieure (22) adhère à la couche inférieure (32) ;
iii) on positionne une paire d'électrodes (25) sur la couche de liaison inférieure (22) en espaçant ladite paire d'électrodes (25) suivant la direction horizontale (X) ;
iv) on forme le corps (24) formant une couche piézorésistive sur la couche inférieure (22) et ladite paire d'électrodes (25) ;
v) on dépose une couche de liaison supérieure (26) sur la couche piézorésistive (24) de telle sorte que la couche de liaison supérieure (26) adhère à la couche piézorésistive (24) ; et
vi) on dépose alors une couche supérieure (34) d'enrobés bitumineux sur la couche de liaison supérieure (26).

## Patentansprüche

1. Erfassungsvorrichtung (20) zum Messen einer auf eine Wand wirkenden Kraft oder einer Verformung eines Wandlers, der unter einer Oberfläche (36) der Wand integriert ist, wobei die Vorrichtung die Wand und den Wandler (23, 323) umfasst, und bei der
der Wandler von einem Körper (24, 324) und einer Vielzahl von Elektroden (25, 325, 425, 525), die in einem Abstand voneinander an dem Körper befestigt sind, gebildet ist,
der Wandler derart ist, dass eine anhand der Vielzahl von Elektroden bestimmte elektrische Impedanz (R) in Abhängigkeit von den Verformungen, die der Wandler erfährt, variabel ist,
in einer Ansicht entlang einer Richtung senkrecht zu der Oberfläche (36) der Wand wenigstens zwei Elektroden (25) der Vielzahl von Elektroden voneinander getrennt sind, und
der Wandler unter der Oberfläche (36) der Wand integriert ist,
wobei die Vorrichtung **dadurch gekennzeichnet ist, dass**
die Elektroden flexibel sind, und
der Wandler so ausgelegt ist, dass wenn eine Kraft an die Erfassungsvorrichtung auf die Oberfläche (36) der Wand in einer Richtung senkrecht zu der Oberfläche angelegt wird, sich der Wandler hauptsächlich in einer Ebene im Wesentlichen parallel zu der Oberfläche der Wand verformt, und eine zwischen den wenigstens zwei Elektroden (25) der Vielzahl von Elektroden gemessene Impedanz variiert.

2. Erfassungsvorrichtung nach Anspruch 1, ferner umfassend eine Übertragungsschicht (34, 46, 116), die an einer Seite des Wandlers (23, 323) haftet und den Wandler von der Oberfläche der Wand trennt, und bei der die Übertragungsschicht (34, 46, 116) und die Wand von demselben Material, insbesondere von bituminösem Mischgut gebildet sind.

3. Erfassungsvorrichtung nach Anspruch 2, bei der die Übertragungsschicht (34, 46, 116) und die Wand einstückig ausgebildet sind.

4. Erfassungsvorrichtung nach einem der Ansprüche 1 bis 3, bei der der Körper des Wandlers (24) ein piezoresistives Polymer oder eine Mischung aus einer Vielzahl von piezoresistiven Polymeren oder eine Mischung aus wenigstens einem Polymer mit leitfähigen Mikro- und Nanopartikeln oder eine Mischung aus bituminösem Mischgut oder Bitumen mit Mikro- und Nanopartikeln umfasst.

5. Erfassungsvorrichtung nach einem der Ansprüche 1 bis 3, bei der der Körper (24) des Wandlers ein perkolierendes Netzwerk aus Mikro- und/oder Nanopartikeln umfasst, wobei die Mikro- und/oder Nanopartikel ein oder mehrere Partikel aus der folgenden Liste umfassen:
a) Kohlenstoffnanoröhren, insbesondere in einem zufälligen oder organisierten Netzwerk,
b) selbstorganisierte Mikro- oder Nanopartikel,
c) Schichten aus Graphen, Graphit oder Graphenoxid, reduziert oder nicht.

6. Band (21, 121), umfassend eine Vielzahl von Erfassungsvorrichtungen nach einem der Ansprüche 1 bis 5, die an einem Streifen befestigt sind, insbesondere einem aus flexiblem Polymer gebildeten Streifen.

7. Sensor (10), umfassend wenigstens eine Erfassungsvorrichtung (20, 120) nach einem der Ansprüche 1 bis 5 und ein Impedanzbestimmungssystem (12), das an Elektroden (25, 325, 425, 525) wenigstens eines Wandlers der wenigstens einen Erfassungsvorrichtung angeschlossen und geeignet ist, eine Impedanz und/oder eine Impedanzänderung des wenigstens einen Wandlers zu bestimmen.

8. Sensor (10) nach Anspruch 7, umfassend eine Anordnung von Wandlern, die in Netzform angeordnet sind, insbesondere um eine Matrix zu bilden, und ferner umfassend Mittel, die ermöglichen, zu erkennen, welche Wandler zu einem gegebenen Zeitpunkt aktiviert oder aufgerufen werden.

9. Anzeigevorrichtung, die geeignet ist, veränderliche Informationen anzuzeigen und wenigstens eine Erfassungsvorrichtung nach einem der Ansprüche 1 bis 5 umfasst.

10. Kraftmessverfahren, umfassend die folgenden Schritte:
a) Bereitstellen einer Erfassungsvorrichtung nach einem der Ansprüche 1 bis 5,
b) Anlagen einer Kraft an den Wandler der Erfassungsvorrichtung in einer solchen Richtung, dass in einer Ansicht entlang dieser Richtung wenigstens zwei Elektroden der Vielzahl von Elektroden voneinander getrennt sind,
c) Messen der Änderung der Impedanz unter der Wirkung der angelegten Kraft, und
d) Bestimmen der angelegten Kraft in Abhängigkeit von der Impedanzänderung.

11. Verfahren zur Herstellung einer Erfassungsvorrichtung nach einem der Ansprüche 1 bis 5, umfassend die Wand und den Wandler, wobei das Verfahren die folgenden Schritte umfasst
a) Positionieren der Vielzahl von flexiblen Elektroden (25, 325, 425, 525) in Kontakt mit dem Körper (24), wobei der Körper und die Elektroden derart sind, dass eine anhand der Vielzahl von Elektroden bestimmte elektrische Impedanz (R) in Abhängigkeit von den Verformungen, welche der der Vielzahl von Elektroden zugeordnete Körper erfährt, variabel ist, wobei der Körper und die Vielzahl von Elektroden somit einen Wandler (23) bilden, und
b) Ausbilden der Wand,
wobei die Schritte a) und b) so ausgeführt, dass der Wandler (23) unter der Oberfläche (36) der Wand integriert ist und dass in einer Ansicht entlang einer Richtung senkrecht zu der Oberfläche wenigstens zwei der Elektroden (25, 325, 425, 525) voneinander getrennt sind.

12. Verfahren zur Herstellung einer Fahrbahn, umfassend die folgenden Schritte:
A) Vorbereiten einer Tragfläche (113),
B) Abscheiden wenigstens einer Schicht aus bituminösem Mischgut (116), unter Integrieren wenigstens eines Wandlers (320), auf der Tragfläche, so dass die Fahrbahn eine Erfassungsvorrichtung umfasst, die durch ein Verfahren nach Anspruch 11 gebildet ist.

13. Verfahren zur Herstellung einer Fahrbahn nach Anspruch 12, bei dem Schritt B) mehrere Phasen umfasst:
i) Abscheiden einer unteren Schicht (32) aus bituminösem Mischgut,
ii) Abscheiden einer unteren Verbindungsschicht (22) auf einer oberen Fläche der unteren Schicht (32), so dass die untere Verbindungsschicht (22) an der unteren Schicht (32) haftet,
iii) Positionieren eines Elektrodenpaares (25) auf der unteren Verbindungsschicht (22) durch Beabstanden des Elektrodenpaares (25) in horizontaler Richtung (X),
iv) Ausbilden des Körpers (24), der eine piezoresistive Schicht auf der unteren Schicht (22) und dem Elektrodenpaar (25) bildet,
v) Abscheiden einer oberen Verbindungsschicht (26) auf der piezoresistiven Schicht (24), so dass die obere Verbindungsschicht (26) auf der piezoresistiven Schicht (24) haftet, und
vi) anschließendes Abscheiden einer oberen Schicht (34) aus bituminösem Mischgut auf der oberen Verbindungsschicht (26).

## Claims

1. An acquisition device (20) to measure a force exerting on a wall or a deformation of a transducer integrated under a surface (36) of the wall; the device comprising said wall and said transducer (23, 323), and in which
the transducer is constituted by a body (24, 324) and a plurality of electrodes (25, 325, 425, 525) fastened to said body and spaced apart from one another;
the transducer is such that an electrical impedance (R) determined from said plurality of electrodes is variable as a function of deformation to which the transducer is subjected;
when looking in a direction perpendicular to the surface (36) of the wall, at least two electrodes (25) of said plurality of electrodes are spaced apart from each other; and
the transducer is incorporated under the surface (36) of the wall;
the device being **characterized in that** said electrodes are flexible; and
the transducer is configured so that, if a force is applied to the acquisition device on said surface (36) of the wall, in a direction perpendicular to said surface, the transducer deforms mainly in a plane substantially parallel to the surface of the wall, and an impedance measured between said at least two electrodes (25) of said plurality of electrodes varies.

2. An acquisition device according to claim 1, further comprising a transfer layer (34, 46, 116) adhering to a face of the transducer (23, 323) and separating the transducer from the surface of the wall, and in which the transfer layer (34,46,116) and the wall are made of the same material, in particular bitumimous mix.

3. An acquisition device according to claim 2, wherein the transfer layer (34, 46, 116) and the wall are formed integrally.

4. An acquisition device according to any one of claims 1 to 3, wherein the body of the transducer (24) comprises a piezoresistive polymer, or a mixture of a plurality of piezoresistive polymers, or a mixture of at least one polymer with conductive micro- and nano-particles or a mixture of bituminous mix or of bitumen with micro- and nano-particles.

5. An acquisition device according to any one of claims 1 to 3, wherein the body (24) of the transducer comprises a percolating array of micro- and/or nano-particles, said micro- and/or nano-particles comprising one or more particles from the following list:
a) carbon nanotubes, in particular in a random or an organized array;
b) self-assembled micro- or nano-particles; and
c) sheets of graphene, graphite or graphene oxide reduced or not.

6. A tape (21, 121) comprising a plurality of acquisition devices according to any one of claims 1 to 5, fastened on a strip, in particular a strip made of flexible polyer.

7. A sensor (10) including at least one acquisition device (20, 120) according to any one of claims 1 to 5, and an impedance-determination system (12), connected to electrodes (25, 325, 425, 525) of at least one transducer of said at least one acquisition device, and suitable for determining an impedance and/or an impedance variation of said at least one transducer.

8. A sensor (10) according to claim 7, comprising a set of transducers arranged in an array, in particular so as to form a matrix, and further comprising means for identifying which transducers are activated or stressed at a given instant.

9. A display suitable for displaying variable information and including at least one acquisition device according to any one of claims 1 to 5.

10. A force-measuring method comprising the following steps:
a) providing an acquisition device accordin to any one of claims 1 to 5;
b) applying a force to the transducer of said acquisition device in a direction such that, when seen looking along said direction, at least two electrodes of said plurality of electrodes are spaced apart from each other;
c) measuring the variation of the impedance under the effect of the applied force; and
d) determining the applied force as a function of said impedance variation.

11. A method of fabricating an acquisition device according to any one of claims 1 to 5, comprising said wall and said transducer, the method comprising the following steps:
a) positioning the plurality of flexible electrodes (25, 325, 425, 525) in contact with the body (24), the body and said electrodes being such that an electrical impedance (R) determined from said plurality of electrodes is variable as a function of deformation to which the body associated with said plurality of electrodes is subjected; the body and said plurality of electrodes thus forming a transducer (23); and
b) forming the wall;
the steps a) and b) being performed in such a manner that the transducer (23) is incorporated under said surface (36) of the wall, and that, when seen looking along a direction perpendicular to said surface, at least two of said electrodes (25, 325, 425, 525) are spaced apart from each other.

12. A method of laying a roadway comprising the following steps:
A) preparing a support surface (113); and
B) on said support surface, depositing at least one bituminous mix layer (116) while incorporating therein at least one transducer (320), in such a manner that the roadway includes an acquisition device formed by a method according to claim 11.

13. The method of laying a roadway according to claim 12, wherein step B) comprises several stages:
i) depositing a bottom bituminous mix layer (32);
ii) depositing a bottom bonding layer (22) on a top surface of the bottom layer (32) so that the bottom bonding layer (22) adheres to the bottom layer (32);
iii) putting in place a pair of electrodes (25) on the bottom bonding layer (22), spacing apart the pair of electrodes (25) in the horizontal direction (X);
iv) forming the body (24) forming a piezoresistive layer on the bottom layer (22) and on said pair of electrodes (25);
v) depositing a top bonding layer (26) on the piezoresistive layer (24) so that the top bonding layer (26) adheres to the piezoresistive layer (24); and
vi) depositing then a top bituminous mix layer (34) on the top bonding layer (26).
